# EUROPEAN PATENT APPLICATION

(11) **EP 4 712 048 A1**
(43) Date of publication of application: **18.03.2026**
(21) Application number: 24806377.8
(22) Date of filing: 30.04.2024
(51) Int. Cl.: G06V 20/58

(54) **IMAGE PROCESSING METHOD AND APPARATUS, COMPUTER-READABLE STORAGE MEDIUM, AND ELECTRONIC DEVICE**

(30) Priority: 12.05.2023 CN 202310539281
(71) Applicant: Beijing Horizon Information Technology Co., Ltd., Beijing 100094 (CN)
(72) Inventor: XIN, Jiahui, Beijing 100094 (CN)
(74) Representative: v. Bezold & Partner Patentanwälte - PartG mbB
(86) International application number: PCT/CN2024/090992
(87) International publication number: WO 2024/235021

(57) **Abstract**

Embodiments of this disclosure disclose an image processing method and apparatus, a computer readable storage medium, and an electronic device. The method includes: performing edge detection on a to-be-processed image, to determine a bounding box for a moving object in the to-be-processed image; obtaining a target motion blur recognition result of the moving object based on a preset brightness distribution ratio range and brightness values of pixels in a region enclosed by the bounding box; and performing predetermined processing on the to-be-processed image based on the target motion blur recognition result. According to the embodiments of this disclosure, adverse effects caused by motion blur can be avoided, helping to ensure execution effects of a machine vision task.

## Description

This disclosure claims the priority to the Chinese patent application No. CN202310539281.7, filed with the Chinese Patent Office on May 12, 2023 and entitled "IMAGE PROCESSING METHOD AND APPARATUS, COMPUTER READABLE STORAGE MEDIUM, AND ELECTRONIC DEVICE", which is incorporated herein by references in its entirety.

### FIELD OF THE INVENTION

This disclosure relates to the technical field of driving, and in particular, to an image processing method and apparatus, a computer readable storage medium, and an electronic device.

### BACKGROUND OF THE INVENTION

A vehicle-mounted device (such as an in-vehicle camera) often captures subjects such as high-speed vehicles. As a result, in night scenes, due to increased exposure time, images captured by the vehicle-mounted device are prone to having motion blur.

### SUMMARY OF THE INVENTION

Embodiments of this disclosure provide an image processing method and apparatus, a computer readable storage medium, and an electronic device.

According to an aspect of an embodiment of this disclosure, an image processing method is provided, including:
performing edge detection on a to-be-processed image, to determine a bounding box for a moving object in the to-be-processed image;
obtaining a target motion blur recognition result of the moving object based on a preset brightness distribution ratio range and brightness values of pixels in a region enclosed by the bounding box; and
performing predetermined processing on the to-be-processed image based on the target motion blur recognition result.

According to another aspect of an embodiment of this disclosure, an image processing apparatus is provided, including:
a first determining module, configured to perform edge detection on a to-be-processed image, to determine a bounding box for a moving object in the to-be-processed image;
an obtaining module, configured to obtain a target motion blur recognition result of the moving object based on a preset brightness distribution ratio range and brightness values of pixels in a region enclosed by the bounding box determined by the first determining module; and
an execution module, configured to perform predetermined processing on the to-be-processed image based on the target motion blur recognition result obtained by the obtaining module.

According to still another aspect of an embodiment of this disclosure, a computer readable storage medium is provided. The storage medium stores a computer program, when executed by a processor, causes the processor to implement the image processing method described above.

According to yet another aspect of an embodiment of this disclosure, an electronic device is provided, wherein the electronic device includes:
a processor; and
a memory, configured to store processor-executable instructions, wherein
the processor is configured to read the executable instructions from the memory, and execute the instructions to implement the image processing method described above.

According to still yet another aspect of an embodiment of this disclosure, a computer program product is provided. When instructions in the computer program product are executed by a processor, the image processing method described above is implemented.

Based on the image processing method and apparatus, the computer readable storage medium, the electronic device, and the product that are provided in the foregoing embodiments of this disclosure, the bounding box of the moving object in the to-be-processed image may be determined by performing edge detection on the to-be-processed image. Further, the target motion blur recognition result of the moving object may be obtained through motion blur recognition in combination with the preset brightness distribution ratio range. The target motion blur recognition result may be used for predetermined processing on the to-be-processed image, so as to efficiently and reliably implement a predetermined machine vision task. This avoids adverse effects of motion blur on normal execution of the machine vision task, thereby helping to ensure execution effects of the machine vision task. In addition, in the embodiments of this disclosure, there is no need to reduce exposure time in a night environment to weaken motion blur, but image capturing can be performed with normal exposure time. This helps to avoid adverse effects of reduced exposure time on a signal-to-noise ratio and brightness of an image, thereby helping to ensure the execution effect of the machine vision task.

Technical solutions of this disclosure are further described below in detail with reference to the accompanying drawings and the embodiments.

### BRIEF DESCRIPTION OF THE DRAWINGS

FIG. 1 is a schematic flowchart of an image processing method according to an exemplary embodiment of this disclosure;
FIG. 2 is a schematic flowchart of obtaining a target motion blur recognition result in an image processing method according to an exemplary embodiment of this disclosure;
FIG. 3 is a schematic flowchart of segmenting a region enclosed by a bounding box into a first motion blur region and a first body region in an image processing method according to an exemplary embodiment of this disclosure;
FIG. 4 is a schematic flowchart of determining whether a first motion blur region meets a preset integrity condition in an image processing method according to an exemplary embodiment of this disclosure;
FIG. 5 is a schematic flowchart of determining whether a first motion blur region meets a preset integrity condition in an image processing method according to another exemplary embodiment of this disclosure;
FIG. 6 is a schematic diagram of a moving object and a motion blur region in an image processing method according to an exemplary embodiment of this disclosure;
FIG. 7 is a schematic flowchart of determining a bounding box for a moving object in a to-be-processed image in an image processing method according to an exemplary embodiment of this disclosure;
FIG. 8 is a schematic flowchart of an image processing method according to another exemplary embodiment of this disclosure;
FIG. 9 is a schematic diagram of a structure of an image processing apparatus according to an exemplary embodiment of this disclosure;
FIG. 10 is a schematic diagram of a structure of an image processing apparatus according to another exemplary embodiment of this disclosure;
FIG. 11 is a schematic diagram of a structure of an image processing apparatus according to still another exemplary embodiment of this disclosure;
FIG. 12 is a schematic diagram of a structure of an image processing apparatus according to yet another exemplary embodiment of this disclosure;
FIG. 13 is a schematic diagram of a structure of an image processing apparatus according to still yet another exemplary embodiment of this disclosure; and
FIG. 14 is a diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Application overview

In night scenes, due to increased exposure time, images captured by a vehicle-mounted device are prone to exhibit motion blur. Motion blur generally refers to traces caused by repetition of edge parts due to too long exposure time when a moving subject is imaged on a complementary metal oxide semiconductor (CMOS).

### Exemplary method

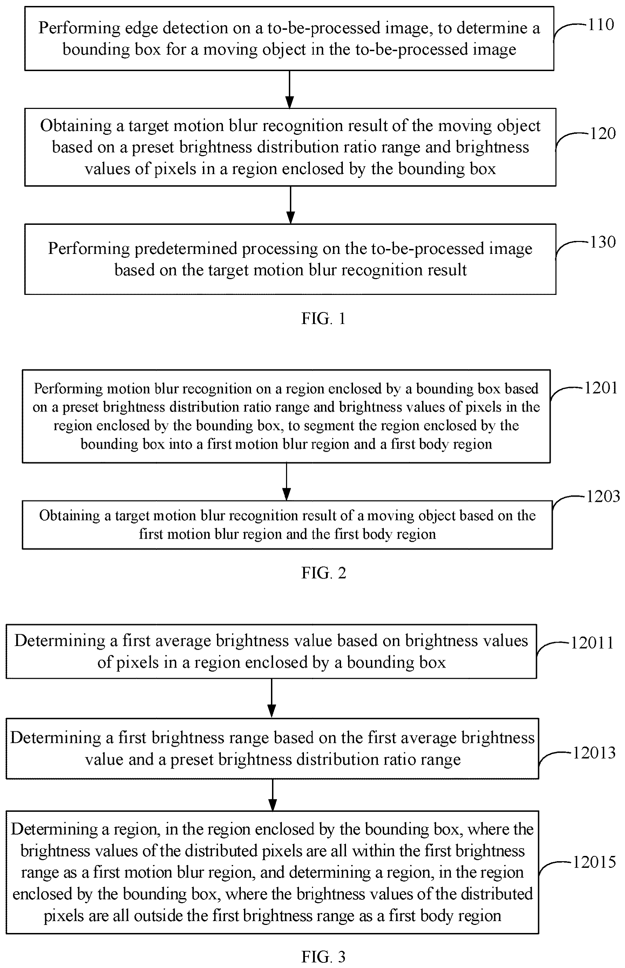

FIG. 1 is a schematic flowchart of an image processing method according to an exemplary embodiment of this disclosure. The method shown in FIG. 1 may include steps 110, 120, and 130.

Step 110: Performing edge detection on a to-be-processed image, to determine a bounding box for a moving object in the to-be-processed image.

In an optional example, step 110 can be executed either by a processor invoking corresponding instructions stored in a memory, or by a first determining module that is run by the processor.

In step 110, edge detection may be performed on the to-be-processed image by using an edge detection algorithm, to recognize pixels with obvious brightness changes in the to-be-processed image, so as to determine the bounding box for the moving object in the to-be-processed image.

Optionally, the edge detection algorithm may include the following steps: 1. Smooth an image by using a filter (such as a Gaussian filter). 2. Calculate a gradient amplitude and a direction of the image. 3. Perform non-maximum suppression on the gradient amplitude. 4. Detect and connect edges by using a dual-threshold algorithm.

Optionally, the to-be-processed image may be an RGB image captured by the vehicle-mounted device in a real-time manner, or a historical RGB image captured by the vehicle-mounted device, where R represents red, G represents green, and B represents blue.

Optionally, the moving object may be a subject capable of moving, or a component of the subject capable of moving. The subject capable of moving may include but is not limited to a pedestrian, a vehicle, a train, or an intelligent robot.

Step 120: Obtaining a target motion blur recognition result of the moving object based on a preset brightness distribution ratio range and brightness values of pixels in a region enclosed by the bounding box.

In an optional example, step 120 can be executed either by the processor invoking corresponding instructions stored in the memory, or by an obtaining module that is run by the processor.

It should be noted that the preset brightness distribution ratio range may refer to a brightness distribution ratio range that is preset and can be used to distinguish between the moving object itself and motion blur (trailing artifacts) of the moving object. Optionally, the preset brightness distribution ratio range may be represented by using [P1, P2], where P1 may be 5%, 10%, 15%, or other values; and P2 may be 80%, 85%, 90%, or other values. These are not enumerated herein.

In step 120, the brightness values of all pixels (assuming there are N pixels) in the region enclosed by the bounding box may be determined, so as to obtain N brightness values. With reference to the preset brightness distribution ratio range and the N brightness values, it is possible to determine which pixels among the N pixels are used to represent the moving object and which pixels are used to represent the motion blur of the moving object, so as to determine the target motion blur recognition result of the moving object on this basis. Optionally, the target motion blur recognition result may include the pixels used to represent the motion blur of the moving object. Alternatively, the target motion blur recognition result may include a region, in the to-be-processed image, where the pixels used to represent the motion blur of the moving object are located.

Step 130: Performing predetermined processing on the to-be-processed image based on the target motion blur recognition result.

In an optional example, step 130 can be executed either by the processor invoking corresponding instructions stored in the memory, or by an execution module that is run by the processor.

In step 130, with reference to the target motion blur recognition result, motion blur removal may be performed on the to-be-processed image, and the predetermined processing may be performed on the to-be-processed image on which the motion blur removal has been performed, to implement a predetermined machine vision task.

Optionally, the to-be-processed image may include a foreground portion and a background portion, and the bounding box of the moving object may be located in the foreground portion. With reference to the target motion blur recognition result, the brightness values of the pixels in the to-be-processed image that are used to represent the motion blur of the moving object may all be updated to be consistent with an average brightness value of the background portion, so as to obtain the to-be-processed image on which the motion blur removal has been performed.

Optionally, the predetermined machine vision task may include but is not limited to an image segmentation task, a recognition task (such as an obstacle recognition task), or a status prediction task (such as a pedestrian status prediction task).

Certainly, in step 130, motion blur removal may not be performed on the to-be-processed image. However, with reference to the target motion blur recognition result, image segmentation, recognition, and other processing may be directly performed on regions, in the to-be-processed image, except the region where the pixels used to represent the motion blur of the moving object are located.

Based on the image processing method provided in the foregoing embodiment of this disclosure, the bounding box of the moving object in the to-be-processed image may be determined by performing edge detection on the to-be-processed image. Further, the target motion blur recognition result of the moving object may be obtained through motion blur recognition in combination with the preset brightness distribution ratio range. The target motion blur recognition result may be used for predetermined processing on the to-be-processed image, so as to efficiently and reliably implement the predetermined machine vision task. This avoids adverse effects of motion blur on normal execution of the machine vision task, thereby helping to ensure execution effects of the machine vision task. In addition, in this embodiment of this disclosure, there is no need to reduce exposure time in a night environment to weaken motion blur, but image capturing can be performed with normal exposure time. This helps to avoid adverse effects of reduced exposure time on a signal-to-noise ratio and brightness of an image, thereby helping to ensure the execution effect of the machine vision task.

In an optional example, as shown in FIG. 2, step 120 may include steps 1201 and 1203.

Step 1201: Performing motion blur recognition on the region enclosed by the bounding box based on the preset brightness distribution ratio range and the brightness values of the pixels in the region enclosed by the bounding box, to segment the region enclosed by the bounding box into a first motion blur region and a first body region.

In an optional example, step 1201 can be executed either by the processor invoking corresponding instructions stored in the memory, or by a segmentation submodule that is run by the processor.

In an optional example, as shown in FIG. 3, step 1201 may include steps 12011, 12013, and 12015.

Step 12011: Determining a first average brightness value based on the brightness values of the pixels in the region enclosed by the bounding box.

In an optional example, step 12011 can be executed either by the processor invoking corresponding instructions stored in the memory, or by a first determining unit that is run by the processor.

In step 12011, the brightness values of the N pixels in the region enclosed by the bounding box may be obtained to obtain N brightness values; and an averaging operation may be performed based on the N brightness values to obtain the first average brightness value. Optionally, an average value of the N brightness values may be directly calculated, and the calculated average value may be used as the first average brightness value. Alternatively, two brightness values with a largest value and a smallest value may be filtered out from the N brightness values, an average value of remaining N-2 brightness values may be calculated, and the calculated average value may be used as the first average brightness value.

Step 12013: Determining a first brightness range based on the first average brightness value and the preset brightness distribution ratio range.

In an optional example, step 12013 can be executed either by the processor invoking corresponding instructions stored in the memory, or by a second determining unit that is run by the processor.

In step 12013, a smallest ratio in the preset brightness distribution ratio range may be multiplied by the first average brightness value to obtain the first brightness value, and a maximum ratio in the preset brightness distribution ratio range may be multiplied by the first average brightness value to obtain a second brightness value. The first brightness range may be a brightness range from the first brightness value to the second brightness value. If the preset brightness distribution ratio range is represented by using [P1, P2] and the first average brightness value is represented by using L, the first brightness value may be represented by using P1*L, the second brightness value may be represented by using P2*L, and the first brightness range may be represented by using [P1*L, P2*L].

Certainly, the manner of determining the first brightness range is not limited thereto. For example, the first brightness value may be multiplied by a preset coefficient (which may be 1.1, 1.2, or other coefficients) to obtain a third brightness value, and the second brightness value may be multiplied by the preset coefficient to obtain a fourth brightness value. The first brightness range may be a brightness range from the third brightness value to the fourth brightness value. For another example, a second smallest ratio in the preset brightness distribution ratio range may be multiplied by the first average brightness value to obtain a fifth brightness value, and a second largest ratio in the preset brightness distribution ratio range may be multiplied by the first average brightness value to obtain a sixth brightness value. The first brightness range may be a brightness range from the fifth brightness value to the sixth brightness value.

Step 12015: Determining a region, in the region enclosed by the bounding box, where the brightness values of the distributed pixels are all within the first brightness range as the first motion blur region, and determining a region, in the region enclosed by the bounding box, where the brightness values of the distributed pixels are all outside the first brightness range as the first body region.

In an optional example, step 12015 can be executed either by the processor invoking corresponding instructions stored in the memory, or by a segmentation unit that is run by the processor.

In step 12015, the N pixels in the region enclosed by the bounding box may be traversed. If the brightness value of a certain pixel among the N pixels is within the first brightness range, it may be considered that a position of that pixel belongs to the first motion blur region. If the brightness value of a certain pixel among the N pixels is outside the first brightness range, it may be considered that a position of that pixel belongs to the first body region. After the N pixels are traversed, the region enclosed by the bounding box may be divided into two parts: the first body region and the first motion blur region. The first body region may be considered as a region, where the moving object is located, that is determined through one-time motion blur recognition, and the first motion blur region may be considered as a region, where the motion blur of the moving object is located, that is determined through one-time motion blur recognition.

In this implementation, with reference to the brightness values of the N pixels in the region enclosed by the bounding box, the first average brightness value can be efficiently and reliably determined through the averaging operation. Further, the first brightness range can be efficiently and reliably determined in combination with the preset brightness distribution ratio range. With reference to distribution of the brightness values of the N pixels relative to the first brightness range, the region enclosed by the bounding box can be efficiently segmented, so as to determine the first motion blur region and the first body region through segmentation.

Certainly, the implementation of step 1201 is not limited thereto. For example, after the first average brightness value, the third brightness value, and the fourth brightness value are sequentially determined, the first brightness range may not be determined. Instead, a region, in the region enclosed by the bounding box, where the brightness values of the distributed pixels are all greater than or equal to the third brightness value and less than or equal to the fourth brightness value is directly determined as the first motion blur region, and a remaining region in the region enclosed by the bounding box is determined as the first body region.

Step 1203: Obtaining the target motion blur recognition result of the moving object based on the first motion blur region and the first body region.

In an optional example, step 1203 can be executed either by the processor invoking corresponding instructions stored in the memory, or by an obtaining submodule that is run by the processor.

In an optional implementation, step 1203 may include:
taking the first motion blur region as the target motion blur recognition result of the moving object in response to that the first motion blur region meets a preset integrity condition; and
performing motion blur recognition on the first body region based on motion blur recognition reference information associated with both the preset brightness distribution ratio range and the brightness values of the pixels in the first body region in response to that the first motion blur region does not meet the preset integrity condition, to segment the first body region into a second motion blur region and a second body region, and obtaining the target motion blur recognition result of the moving object based on the second motion blur region and the second body region.

In an optional example, the step of taking the first motion blur region as the target motion blur recognition result of the moving object in response to that the first motion blur region meets a preset integrity condition can be executed either by the processor invoking corresponding instructions stored in the memory, or by a third determining unit that is run by the processor.

In an optional example, the step of performing motion blur recognition on the first body region based on motion blur recognition reference information associated with both the preset brightness distribution ratio range and the brightness values of the pixels in the first body region in response to that the first motion blur region does not meet the preset integrity condition, to segment the first body region into a second motion blur region and a second body region, and obtaining the target motion blur recognition result of the moving object based on the second motion blur region and the second body region can be executed either by the processor invoking corresponding instructions stored in the memory, or by a fourth determining unit that is run by the processor.

In this implementation, after the region enclosed by the bounding box is segmented into the first motion blur region and the first body region, it may be determined whether the first motion blur region meets the preset integrity condition.

If the first motion blur region meets the preset integrity condition, it may be considered that the first motion blur region fully contains the motion blur of the moving object. In other words, the motion blur of the moving object is accurately recognized. In this case, the first motion blur region may be directly used as the target motion blur recognition result of the moving object.

If the first motion blur region does not meet the preset integrity condition, it may be considered that the first motion blur region does not fully contain the motion blur of the moving object. In other words, the motion blur of the moving object is not accurately recognized. In this case, the motion blur recognition reference information associated with both the preset brightness distribution ratio range and the brightness values of the pixels in the first body region may be determined.

Optionally, there may be M pixels in the first body region, and the motion blur recognition reference information may include the preset brightness distribution ratio range and the brightness values of the M pixels in the first body region. In this way, with reference to the specific implementation of step 1201 described above, in a similar manner, the first body region may be segmented into the second motion blur region and the second body region based on the preset brightness distribution ratio range and the brightness values of the M pixels in the first body region.

In some embodiments, with reference to the specific implementation of step 12011 described above, in a similar manner, a second average brightness value may be determined based on the brightness values of the M pixels in the first body region; with reference to the specific implementation of step 12013 described above, in a similar manner, a second brightness range may be determined based on the second average brightness value and the preset brightness distribution ratio range; and with reference to the specific implementation of step 12015 described above, in a similar way, the first body region may be segmented into the second motion blur region and the second body region based on distribution of the brightness values of the M pixels in the first body region relative to the second brightness range.

After the segmentation of the first body region is completed, the target motion blur recognition result of the moving object may be obtained based on the second motion blur region and the second body region. For example, whether the second motion blur region meets the preset integrity condition may be determined. If the second motion blur region meets the preset integrity condition, the second motion blur region may be directly used as the target motion blur recognition result. If the second motion blur region does not meet the preset integrity condition, motion blur recognition may be performed on the second body region again to segment the second body region into a third motion blur region and a third body region. A subsequent process is similar to the process of segmenting the first body region into the second motion blur region and the second body region, and details are not described herein again.

In this implementation, with reference to whether the first motion blur region meets the preset integrity condition, it may be decided whether to directly use the first motion blur region as the target motion blur recognition result, or further to perform motion blur recognition on the basis of the first body region. This helps to ensure accuracy and reliability of the finally obtained target motion blur recognition result.

Certainly, the implementation of step 1203 is not limited thereto. For example, when the first motion blur region meets the preset integrity condition, the first motion blur region may not be directly used as the target motion blur recognition result. Instead, the first motion blur region is marked and is presented to a user for correction, and the corrected first motion blur region is used as the target motion blur recognition result.

In the embodiments of this disclosure, by applying the preset brightness distribution ratio range and the brightness values of the pixels in the region enclosed by the bounding box, the region enclosed by the bounding box can be efficiently and reliably segmented into the first motion blur region and the first body region through motion blur recognition, so that the first motion blur region and the first body region are used for obtaining the target motion blur recognition result, The target motion blur recognition result is used for the machine vision task, thereby helping to ensure the execution effects of the machine vision task.

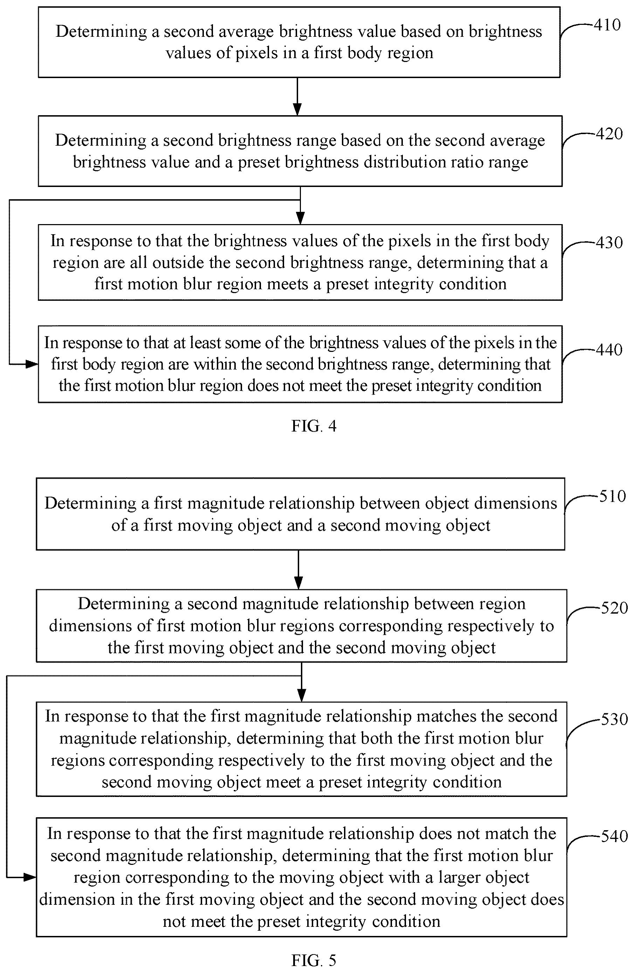

As shown in FIG. 4, the flow of determining whether the first motion blur region meets the preset integrity condition according to an exemplary embodiment of this disclosure may include steps 410, 420, 430, and 440.

Step 410: Determining a second average brightness value based on the brightness values of the pixels in the first body region.

In an optional example, step 410 can be executed either by the processor invoking corresponding instructions stored in the memory, or by a second determining module that is run by the processor.

It should be noted that, for a specific implementation process of step 410, reference may be made to the description about step 12011, and details are not described herein.

Step 420: Determining a second brightness range based on the second average brightness value and the preset brightness distribution ratio range.

In an optional example, step 420 can be executed either by the processor invoking corresponding instructions stored in the memory, or by a third determining module that is run by the processor.

It should be noted that, for a specific implementation process of step 420, reference may be made to the description about step 12013, and details are not described herein.

Step 430: In response to that the brightness values of the pixels in the first body region are all outside the second brightness range, determining that the first motion blur region meets the preset integrity condition.

In an optional example, step 430 can be executed either by the processor invoking corresponding instructions stored in the memory, or by a fourth determining module that is run by the processor.

Step 440: In response to that at least some of the brightness values of the pixels in the first body region are within the second brightness range, determining that the first motion blur region does not meet the preset integrity condition.

In an optional example, step 440 can be executed either by the processor invoking corresponding instructions stored in the memory, or by a fifth determining module that is run by the processor.

The M pixels in the first body region may be traversed after the second brightness range is determined. If the brightness value of at least one pixel among the M pixels is within the second brightness range, it may be determined that the first motion blur region does not meet the preset integrity condition. If the respective brightness values of all the M pixels are outside the second brightness range, it may be determined that the first motion blur region meets the preset integrity condition.

In this embodiment of this disclosure, with reference to the respective brightness values of the M pixels in the first body region, the second average brightness value can be efficiently and reliably determined through an averaging operation. Further, the second brightness range can be efficiently and reliably determined in combination with the preset brightness distribution ratio range. Whether the first motion blur region meets the preset integrity condition can be efficiently and reliably determined with reference to the distribution of the respective brightness values of the M pixels relative to the second brightness range, so as to determine whether motion blur recognition further needs to be performed on the first motion blur region.

In an optional example, there may be one moving object.

In another optional example, there may be at least two moving objects, which may include a first moving object and a second moving object. As shown in FIG. 5, the flow of determining whether the first motion blur region meets the preset integrity condition according to an exemplary embodiment of this disclosure may include steps 510, 520, 530, and 540.

Step 510: Determining a first magnitude relationship between respective object dimensions of the first moving object and the second moving object.

In an optional example, step 510 can be executed either by the processor invoking corresponding instructions stored in the memory, or by a sixth determining module that is run by the processor.

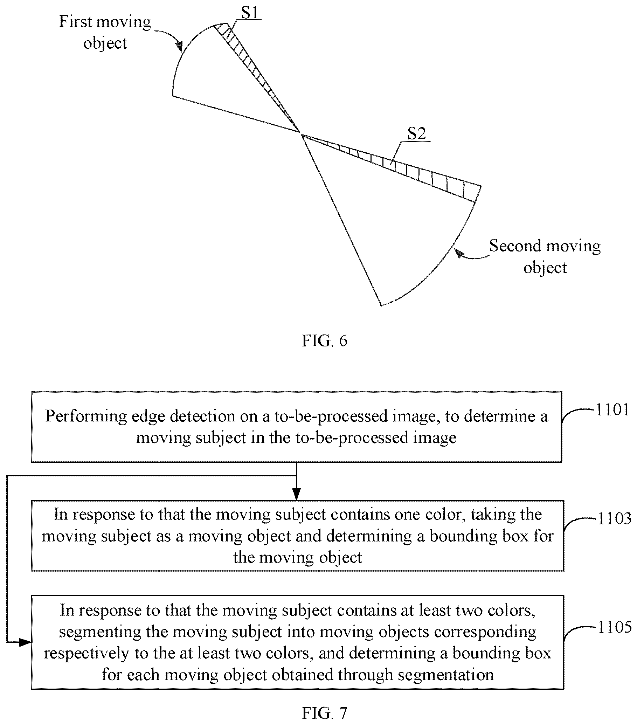

Optionally, the first moving object and the second moving object may have a same shape, for example, both are rectangular or fan-shaped (for details, reference may be made to FIG. 6).

Taking a case where both the first moving object and the second moving object are fan-shaped as an example, the object dimensions of the first moving object may include a first central angle and a first radius, and the object dimensions of the second moving object may include a second central angle and a second radius. Assuming that the first central angle is much close to the second central angle, the first magnitude relationship between the respective object dimensions of the first moving object and the second moving object may be characterized by using a magnitude relationship between the first radius and the second radius. If the first radius is greater than the second radius, the first magnitude relationship may be used to indicate that the object dimension of the first moving object is greater than that of the second moving object.

Taking a case where both the first moving object and the second moving object are rectangular as an example, the object dimensions of the first moving object may include a first length and a first width, and the object dimensions of the second moving object may include a second length and a second width. The first magnitude relationship between the respective object dimensions of the first moving object and the second moving object may be characterized by using a magnitude relationship between the first length and the second length and a magnitude relationship between the first width and the second width.

Step 520: Determining a second magnitude relationship between region dimensions of first motion blur regions corresponding respectively to the first moving object and the second moving object.

In an optional example, step 520 can be executed either by the processor invoking corresponding instructions stored in the memory, or by a seventh determining module that is run by the processor.

Assuming that the first motion blur region corresponding to the first moving object is a region S1 in FIG. 6, and the first motion blur region corresponding to the second moving object is a region S2 in FIG. 6, the second magnitude relationship between the region dimensions of the first motion blur regions corresponding respectively to the first moving object and the second moving object may be characterized by using a magnitude relationship between an area of the region S1 and an area of the region S2. If the area of the region S1 is larger than that of the region S2, the second magnitude relationship may be used to indicate that the region dimension of the first motion blur region corresponding to the first moving object is larger than that of the first motion blur region corresponding to the second moving object.

Step 530: In response to that the first magnitude relationship matches the second magnitude relationship, determining that both the first motion blur regions corresponding respectively to the first moving object and the second moving object meet the preset integrity condition.

In an optional example, step 530 can be executed either by the processor invoking corresponding instructions stored in the memory, or by an eighth determining module that is run by the processor.

Step 540: In response to that the first magnitude relationship does not match the second magnitude relationship, determining that the first motion blur region corresponding to the moving object with a larger object dimension in the first moving object and the second moving object does not meet the preset integrity condition.

In an optional example, step 540 can be executed either by the processor invoking corresponding instructions stored in the memory, or by a ninth determining module that is run by the processor.

If the first magnitude relationship is used to indicate that the object dimension of the first moving object is greater than that of the second moving object, and the second magnitude relationship is used to indicate that the region dimension of the first motion blur region corresponding to the first moving object is greater than that of the first motion blur region corresponding to the second moving object, it may be considered that relative dimensions between different moving objects match relative dimensions between motion blur of the different moving objects. In this case, it may be determined that both the first motion blur regions corresponding respectively to the first moving object and the second moving object meet the preset integrity condition.

If the first magnitude relationship is used to indicate that the object dimension of the first moving object is greater than that of the second moving object, and the second magnitude relationship is used to indicate that the region dimension of the first motion blur region corresponding to the first moving object is smaller than that of the first motion blur region corresponding to the second moving object, it may be considered that relative dimensions between different moving objects do not match relative dimensions between motion blur of the different moving objects. This is very likely caused by that the motion blur of the first moving object is not accurately recognized, and there is still unrecognized motion blur in the first body region. In this case, it may be determined that the first motion blur region corresponding to the first moving object does not meet the preset integrity condition.

In this embodiment of this disclosure, whether the first motion blur region meets the preset integrity condition can be efficiently and reliably determined with reference to whether the relative dimensions between different moving objects match the relative dimensions between motion blur of the different moving objects, so as to determine whether motion blur recognition further needs to be performed on the first body region.

In an optional example, as shown in FIG. 7, step 110 may include steps 1101, 1103, and 1105.

Step 1101: Performing edge detection on the to-be-processed image, to determine a moving subject in the to-be-processed image.

In an optional example, step 1101 can be executed either by the processor invoking corresponding instructions stored in the memory, or by a first determining submodule that is run by the processor.

In step 1101, the edge detection algorithm may be used to perform edge detection on the to-be-processed image to determine the moving subject in the to-be-processed image. The moving subject may be the subject capable of moving that is described above.

Step 1103: In response to that the moving subject contains one color, taking the moving subject as the moving object and determining the bounding box for the moving object.

In an optional example, step 1103 can be executed either by the processor invoking corresponding instructions stored in the memory, or by a second determining submodule that is run by the processor.

Step 1105: In response to that the moving subject contains at least two colors, segmenting the moving subject into moving objects corresponding respectively to the at least two colors, and determining a bounding box for each moving object obtained through segmentation.

In an optional example, step 1105 can be executed either by the processor invoking corresponding instructions stored in the memory, or by a third determining submodule that is run by the processor.

After the moving subject is determined, pixel values respectively on channels R, G, and B of a plurality of pixels (assuming there are K pixels) that are used represent the moving subject may be extracted from the to-be-processed image. By analyzing these extracted pixel values, it is possible to determine what colors do the K pixels appear in a field of view of the user. Thus, a quantity of colors contained in the moving subject (specifically referring to a quantity of colors presented in the field of view of the user) may be determined.

If containing only one color, the moving subject may be directly used as the moving object, and a bounding box of the moving subject may be directly used as the bounding box of the moving object.

If the moving subject contains at least two colors, on the basis of what colors do the K pixels appear in the field of view of the user, the moving subject may be segmented into the moving objects respectively corresponding to the at least two colors, and the bounding box of each moving object obtained through segmentation may be further determined.

Motion blur recognition can be performed on each moving object obtained through segmentation, to obtain a target motion blur recognition result corresponding to that moving object. For a specific recognition manner, reference may be made to the foregoing description, and details are not described herein.

In the embodiments of this disclosure, the moving subject in the to-be-processed image may be determined by performing edge detection on the to-be-processed image. With reference to a quantity of colors contained in the moving subject, it may be decided whether to directly use the moving subject as the moving object, or to segment the moving subject to obtain at least two moving objects in different colors. In this way, in the embodiments of this disclosure, each moving object that requires motion blur recognition may contain only one color, and the single color can make recognition efficiency higher and make a recognition result more reliable.

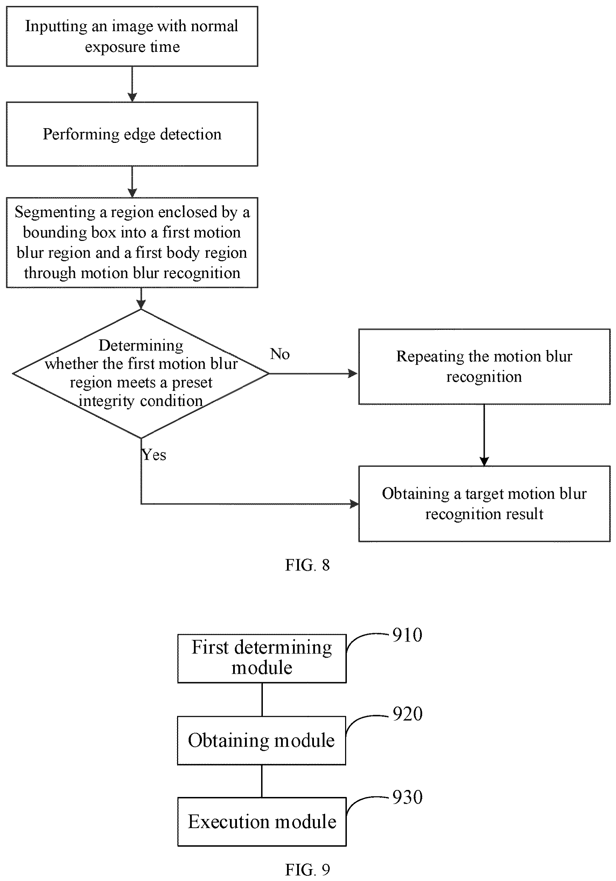

In an optional example, as shown in FIG. 8, an image with normal exposure time (which may be used as the to-be-processed image described above) may be input, and then edge detection may be performed on the image to determine the bounding box of the moving object. Statistics about a real edge of the moving object can be collected through a degree at which edge brightness of the moving object changes, so that the region enclosed by the bounding box is segmented into the first motion blur region and the first body region through motion blur recognition. If it is assumed that an average value of the brightness values of all the pixels in the region enclosed by the bounding box is 100, and the preset brightness distribution ratio range is [5%, 90%], a region, in the region enclosed by the bounding box, where the brightness values of the distributed pixels are all between [5, 90] may be determined as the first motion blur region, and a remaining region in the region enclosed by the bounding box may be determined as the first body region. Subsequently, whether the first motion blur region meets the preset integrity condition may be determined. If the first motion blur region meets the preset integrity condition, the first motion blur region may be directly used as the target motion blur recognition result. If the first motion blur region does not meet the preset integrity condition, motion blur recognition may be repeated. For example, motion blur recognition is performed on the first body region for a second time. Subsequently, according to an actual situation, it may be decided whether to continue the motion blur recognition until the motion blur is entirely recognized, so as to obtain the target motion blur recognition result. Finally, the target motion blur recognition result may be used for the machine vision task to ensure the execution effects of the machine vision task.

Any image processing method provided in the embodiments of this disclosure can be implemented by any suitable device with a data processing capability, including but not limited to a terminal device and a server. Alternatively, any image processing method provided in the embodiments of this disclosure can be implemented by the processor. For example, the processor implements any image processing method described in the embodiments of this disclosure by invoking corresponding instructions stored in the memory. Details are not described below.

Persons of ordinary skills in the art may understand that: all or some of the steps for implementing the foregoing method embodiments may be completed through hardware related to program instructions. A program may be stored in a computer readable storage medium. During execution, the program performs the steps including the foregoing method embodiments. The foregoing storage medium includes various media that may store program code, such as a read-only memory (ROM), a random access memory (RAM), a magnetic disk, or a compact disc.

### Exemplary apparatus

FIG. 9 is a schematic diagram of a structure of an image processing apparatus according to an exemplary embodiment of this disclosure. The apparatus shown in FIG. 9 may be configured to implement any one of the foregoing method embodiments of this disclosure. The apparatus shown in FIG. 9 may include a first determining module 910, an obtaining module 920, and an execution module 930.
a first determining module 910, configured to perform edge detection on a to-be-processed image, to determine a bounding box for a moving object in the to-be-processed image;
an obtaining module 920, configured to obtain a target motion blur recognition result of the moving object based on a preset brightness distribution ratio range and brightness values of pixels in a region enclosed by the bounding box determined by the first determining module 910; and
an execution module 930, configured to perform predetermined processing on the to-be-processed image based on the target motion blur recognition result obtained by the obtaining module 920.

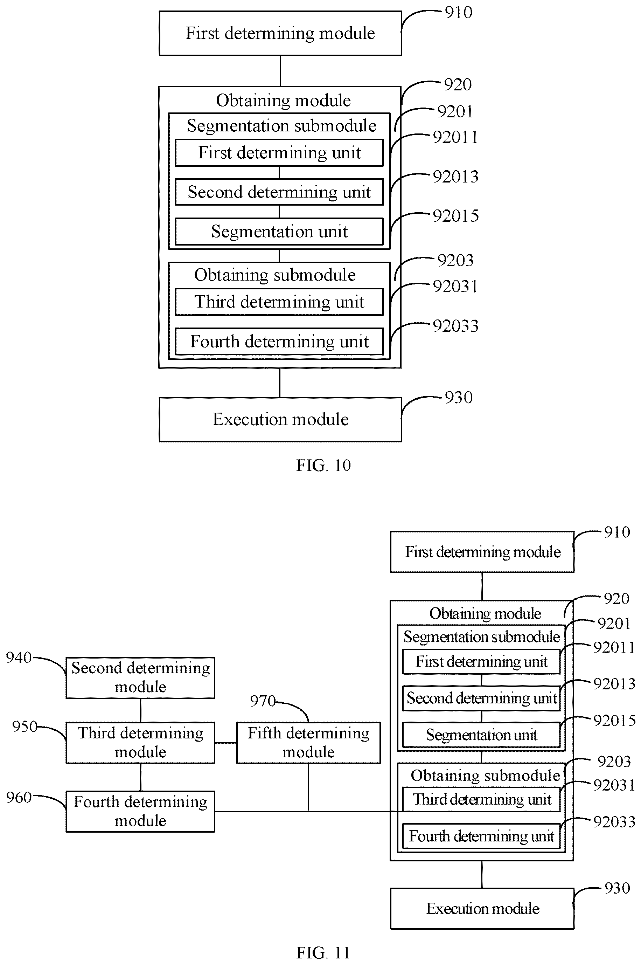

In an optional example, as shown in FIG. 10, the obtaining module 920 may include:
a segmentation submodule 9201, configured to perform motion blur recognition on the region enclosed by the bounding box determined by the first determining module 910 based on the preset brightness distribution ratio range and the brightness values of the pixels in the region enclosed by the bounding box determined by the first determining module 910, to segment the region enclosed by the bounding box determined by the first determining module 910 into a first motion blur region and a first body region; and
an obtaining submodule 9203, configured to obtain the target motion blur recognition result of the moving object based on the first motion blur region and the first body region that are obtained through the segmentation by the segmentation submodule 9201.

In an optional example, as shown in FIG. 10, the segmentation submodule 9201 may include:
a first determining unit 92011, configured to determine a first average brightness value based on the brightness values of the pixels in the region enclosed by the bounding box determined by the first determining module 910;
a second determining unit 92013, configured to determine a first brightness range based on the first average brightness value determined by the first determining unit 92011 and the preset brightness distribution ratio range; and
a segmentation unit 92015, configured to determine a region, in the region enclosed by the bounding box determined by the first determining module 910, where the brightness values of the distributed pixels are all within the first brightness range determined by the second determining unit 92013 as the first motion blur region, and determining a region, in the region enclosed by the bounding box determined by the first determining module 910, where the brightness values of the distributed pixels are all outside the first brightness range determined by the second determining unit 92013 as the first body region.

In an optional example, as shown in FIG. 10, the obtaining submodule 9203 may include:
a third determining unit 92031, configured to take the first motion blur region obtained through the segmentation by the segmentation submodule 9201 as the target motion blur recognition result of the moving object in response to that the first motion blur region obtained through the segmentation by the segmentation submodule 9201 meets a preset integrity condition; and
a fourth determining unit 92033, configured to perform motion blur recognition on the first body region obtained through the segmentation by the segmentation submodule 9201 based on motion blur recognition reference information associated with both the preset brightness distribution ratio range and the brightness values of the pixels in the first body region obtained through the segmentation by the segmentation submodule 9201 in response to that the first motion blur region obtained through the segmentation by the segmentation submodule 9201 does not meet the preset integrity condition, to segment the first body region obtained through the segmentation by the segmentation submodule 9201 into a second motion blur region and a second body region, and obtain the target motion blur recognition result of the moving object based on the second motion blur region and the second body region.

In an optional example, as shown in FIG. 11, the apparatus provided in this embodiment of this disclosure may further include:
a second determining module 940, configured to determine a second average brightness value based on the brightness values of the pixels in the first body region obtained through the segmentation by the segmentation submodule 9201;
a third determining module 950, configured to determine a second brightness range based on the second average brightness value determined by the second determining module 940 and the preset brightness distribution ratio range;
a fourth determining module 960, configured to determine that the first motion blur region obtained through the segmentation by the segmentation submodule 9201 meets the preset integrity condition in response to that the brightness values of the pixels in the first body region obtained through the segmentation by the segmentation submodule 9201 are all outside the second brightness range determined by the third determining module 950; and
a fifth determining module 970, configured to determine that the first motion blur region obtained through the segmentation by the segmentation submodule 9201 does not meet the preset integrity condition in response to that at least some of the brightness values of the pixels in the first body region obtained through the segmentation by the segmentation submodule 9201 are within the second brightness range determined by the third determining module 950.

In an optional example, there are at least two moving objects, including a first moving object and a second moving object.

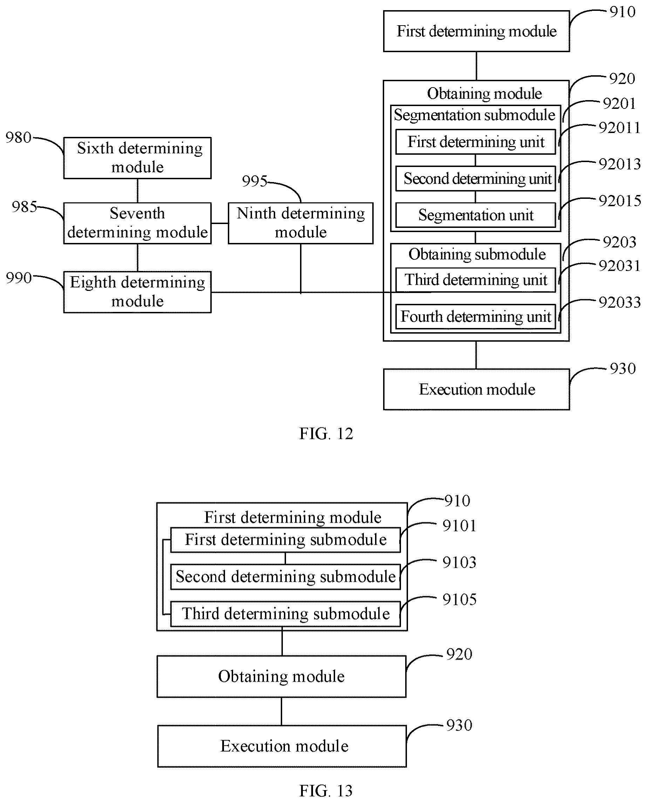

As shown in FIG. 12, the apparatus provided in this embodiment of this disclosure may further include:
a sixth determining module 980, configured to determine a first magnitude relationship between respective object dimensions of the first moving object and the second moving object;
a seventh determining module 985, configured to determine a second magnitude relationship between respective region dimensions of first motion blur regions corresponding respectively to the first moving object and the second moving object;
an eighth determining module 990, configured to: in response to that the first magnitude relationship determined by the sixth determining module 980 matches the second magnitude relationship determined by the seventh determining module 985, determine that both the first motion blur regions corresponding respectively to the first moving object and the second moving object meet the preset integrity condition; and
a ninth determining module 995, configured to: in response to that the first magnitude relationship determined by the sixth determining module 980 does not match the second magnitude relationship determined by the seventh determining module 985, determine that the first motion blur region corresponding to the moving object with a larger object dimension in the first moving object and the second moving object does not meet the preset integrity condition.

In an optional example, as shown in FIG. 13, the first determining module 910 may include:
a first determining submodule 9101, configured to perform edge detection on the to-be-processed image, to determine a moving subject in the to-be-processed image;
a second determining submodule 9103, configured to: in response to that the moving subject determined by the first determining submodule 9101 contains one color, take the moving subject determined by the first determining submodule 9101 as the moving object, and determine the bounding box for the moving object; and
a third determining submodule 9105, configured to: in response to that the moving subject determined by the first determining submodule 9101 contains at least two colors, segment the moving subject determined by the first determining submodule 9101 into moving objects corresponding to the at least two colors, and determine a bounding box for each moving object obtained through segmentation.

In the apparatus in this disclosure, various optional embodiments, optional implementations, and optional examples described above may be flexibly selected and combined according to requirements, so as to implement corresponding functions and effects. These are not enumerated in this disclosure.

### Exemplary electronic device

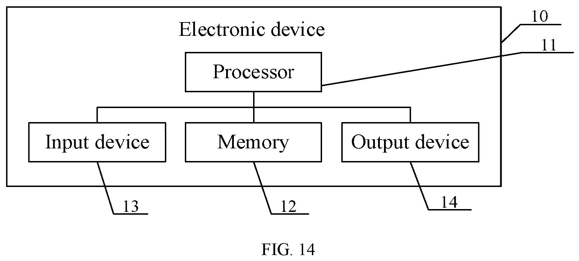

FIG. 14 is a diagram of a structure of an electronic device (such as an electronic device 10) according to an embodiment of this disclosure. The electronic device includes at least one processor 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the one or more program instructions to implement the method according to any one of the method embodiments of this disclosure that are described above and/or other desired functions.

In an optional example, the electronic device 10 may further include an input device 13 and an output device 14. These components are connected to each other through a bus system and/or another form of connection mechanism (not shown).

The input device 13 may further include, for example, a keyboard and a mouse.

The output device 14 can output various information to the outside. The output device 14 may include, for example, a display, a speaker, a printer, a communication network, and a remote output device connected by the communication network.

Certainly, for simplicity, FIG. 14 shows only some of components in the electronic device 10 that are related to this disclosure, and components such as a bus and an input/output interface are omitted. In addition, according to specific application situations, the electronic device 10 may further include any other appropriate components.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method according to any one of the method embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to any one of the method embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. An image processing method, comprising:
performing edge detection on a to-be-processed image, to determine a bounding box for a moving object in the to-be-processed image;
obtaining a target motion blur recognition result of the moving object based on a preset brightness distribution ratio range and brightness values of pixels in a region enclosed by the bounding box; and
performing predetermined processing on the to-be-processed image based on the target motion blur recognition result.

2. The method according to claim 1, wherein the obtaining a target motion blur recognition result of the moving object based on a preset brightness distribution ratio range and brightness values of pixels in a region enclosed by the bounding box comprises:
performing motion blur recognition on the region enclosed by the bounding box based on the preset brightness distribution ratio range and the brightness values of the pixels in the region enclosed by the bounding box, to segment the region enclosed by the bounding box into a first motion blur region and a first body region; and
obtaining the target motion blur recognition result of the moving object based on the first motion blur region and the first body region.

3. The method according to claim 2, wherein the performing motion blur recognition on the region enclosed by the bounding box based on the preset brightness distribution ratio range and the brightness values of the pixels in the region enclosed by the bounding box, to segment the region enclosed by the bounding box into a first motion blur region and a first body region comprises:
determining a first average brightness value based on the brightness values of the pixels in the region enclosed by the bounding box;
determining a first brightness range based on the first average brightness value and the preset brightness distribution ratio range; and
determining a region, in the region enclosed by the bounding box, where the brightness values of the distributed pixels are all within the first brightness range as the first motion blur region, and determining a region, in the region enclosed by the bounding box, where the brightness values of the distributed pixels are all outside the first brightness range as the first body region.

4. The method according to claim 2, wherein the obtaining the target motion blur recognition result of the moving object based on the first motion blur region and the first body comprises:
taking the first motion blur region as the target motion blur recognition result of the moving object in response to that the first motion blur region meets a preset integrity condition; and
performing motion blur recognition on the first body region based on motion blur recognition reference information associated with both the preset brightness distribution ratio range and the brightness values of the pixels in the first body region in response to that the first motion blur region does not meet the preset integrity condition, to segment the first body region into a second motion blur region and a second body region, and obtaining the target motion blur recognition result of the moving object based on the second motion blur region and the second body region.

5. The method according to claim 4, further comprising:
determining a second average brightness value based on the brightness values of the pixels in the first body region;
determining a second brightness range based on the second average brightness value and the preset brightness distribution ratio range;
in response to that the brightness values of the pixels in the first body region are all outside the second brightness range, determining that the first motion blur region meets the preset integrity condition; and
in response to that at least some of the brightness values of the pixels in the first body region are within the second brightness range, determining that the first motion blur region does not meet the preset integrity condition.

6. The method according to claim 4, wherein there are at least two moving objects, comprising a first moving object and a second moving object; and
the method further comprises:
determining a first magnitude relationship between object dimensions of the first moving object and the second moving object;
determining a second magnitude relationship between region dimensions of first motion blur regions corresponding respectively to the first moving object and the second moving object;
in response to that the first magnitude relationship matches the second magnitude relationship, determining that both the first motion blur regions corresponding respectively to the first moving object and the second moving object meet the preset integrity condition; and
in response to that the first magnitude relationship does not match the second magnitude relationship, determining that the first motion blur region corresponding to the moving object with a larger object dimension in the first moving object and the second moving object does not meet the preset integrity condition.

7. The method according to any one of claims 1 to 6, wherein the performing edge detection on a to-be-processed image, to determine a bounding box for a moving object in the to-be-processed image comprises:
performing edge detection on the to-be-processed image, to determine a moving subject in the to-be-processed image;
in response to that the moving subject contains one color, taking the moving subject as the moving object and determining the bounding box for the moving object; and
in response to that the moving subject contains at least two colors, segmenting the moving subject into moving objects corresponding respectively to the at least two colors, and determining a bounding box for each moving object obtained through segmentation.

8. An image data processing apparatus, comprising:
a first determining module, configured to perform edge detection on a to-be-processed image, to determine a bounding box for a moving object in the to-be-processed image;
an obtaining module, configured to obtain a target motion blur recognition result of the moving object based on a preset brightness distribution ratio range and brightness values of pixels in a region enclosed by the bounding box determined by the first determining module; and
an execution module, configured to perform predetermined processing on the to-be-processed image based on the target motion blur recognition result obtained by the obtaining module.

9. A computer readable storage medium, wherein the storage medium stores a computer program, when executed by a processor, causes the processor to implement the image processing method according to any one of claims 1 to 7.

10. An electronic device, wherein the electronic device comprises:
a processor; and
a memory, configured to store processor-executable instructions, wherein
the processor is configured to read the executable instructions from the memory, and execute the instructions to implement the image processing method according to any one of claims 1 to 7.

11. A computer program product, wherein when instructions in the computer program product are executed by a processor, the image processing method according to any one of claims 1 to 7 is implemented.
